# DEMANDE DE BREVET EUROPEEN

(11) **EP 2 017 491 A1**
(43) Date de publication de la demande: **21.01.2009**
(21) Numéro de dépôt: 08290681.9
(22) Date de dépôt: 09.07.2008
(51) Int. Cl.: F16D 23/14

(54) **Procédé de fabrication et rondelle d'autocentrage renforcée mécaniquement**

(30) Priorité: 20.07.2007 FR 0705302
(71) Demandeur: SNR Roulements, 74000 Annecy (FR)
(72) Inventeur: Bouvard, Sébastien, 74000 Annecy (FR)
(74) Mandataire: Sayettat, Julien Christian

(57) **Abrégé**

L'invention concerne un procédé de fabrication d'une rondelle d'autocentrage (9) pour une butée d'embrayage de véhicule automobile, ladite rondelle comprenant une couronne (10) en matériau métallique, ledit procédé prévoyant d'utiliser un matériau métallique ayant subi un traitement mécanique de renforcement qui est agencé pour que ledit matériau présente une limite élastique au moins égale à 850 MPa à 20°C, ladite couronne étant formée dans ledit matériau renforcé mécaniquement. L'invention concerne également une telle rondelle d'autocentrage ainsi qu'un montage d'une butée d'embrayage sur un arbre d'une boîte de vitesses d'un véhicule automobile par l'intermédiaire d'une telle rondelle.

## Description

L'invention concerne un procédé de fabrication d'une rondelle d'autocentrage pour une butée d'embrayage de véhicule automobile, une telle rondelle d'autocentrage ainsi qu'un montage d'une butée d'embrayage sur un arbre d'une boîte de vitesses d'un véhicule automobile par l'intermédiaire d'une telle rondelle.

Dans les applications embrayage, le diaphragme monté sur l'ensemble côté moteur et l'arbre primaire de la boîte de vitesses ne sont pas parfaitement concentriques.

Pour assurer la fonction d'autocentrage du diaphragme sur l'arbre, il est connu d'utiliser une rondelle dite d'autocentrage qui génère un effort d'autocentrage entre ledit arbre et la butée.

Pour ce faire, la butée est montée sur l'arbre par l'intermédiaire d'une telle rondelle de sorte à permettre des débattements élastiques axiaux et radiaux de la butée relativement à l'arbre.

Les rondelles d'autocentrage selon l'art antérieur son formées dans un matériau métallique élastique puis traitées thermiquement, notamment par chauffage et trempe, pour améliorer leur résistance mécanique, en particulier leur limite élastique. En outre, après ce traitement thermique, les rondelles d'autocentrage sont protégées contre la corrosion, notamment par application d'un film d'huile.

Du fait de l'application d'un traitement thermique postérieurement au formage des rondelles, lesdites rondelles ont tendance à se déformer. En outre, pour un même lot de rondelles d'autocentrage, leur déformation n'est pas homogène puisqu'il existe inévitablement des dispersions de température dans le four de traitement thermique.

Par conséquent, l'utilisation d'un traitement thermique génère une dispersion de l'effort d'autocentrage conféré par les rondelles d'autocentrage, ce qui est préjudiciable pour maîtriser la compensation des défauts de concentricité dans le montage de la butée d'embrayage.

L'invention a pour but de résoudre les problèmes de l'art antérieur en proposant notamment une rondelle d'autocentrage dont la maitrise de l'effort d'autocentrage généré est améliorée, de sorte à pouvoir garantir une plus grande stabilité dudit effort d'autocentrage.

A cet effet, et selon un premier aspect, l'invention propose un procédé de fabrication d'une rondelle d'autocentrage pour une butée d'embrayage de véhicule automobile, ladite rondelle comprenant une couronne en matériau métallique, ledit procédé prévoyant d'utiliser un matériau métallique ayant subi un traitement mécanique de renforcement qui est agencé pour que ledit matériau présente une limite élastique au moins égale à 850 MPa à 20°C, ladite couronne étant formée dans ledit matériau renforcé mécaniquement.

Selon un deuxième aspect, l'invention propose une rondelle d'autocentrage pour une butée d'embrayage de véhicule automobile, ladite rondelle étant fabriquée par mise en oeuvre d'un tel procédé pour comprendre une couronne annulaire en matériau métallique qui est renforcée mécaniquement préalablement à sa formation, ledit matériau présentant une limite élastique au moins égale à 850 MPa à 20°C.

Selon un troisième aspect, l'invention propose un montage d'une butée d'embrayage sur un arbre d'une boîte de vitesses d'un véhicule automobile, dans lequel ladite butée est montée sur l'arbre par l'intermédiaire d'une telle rondelle d'autocentrage.

D'autres objets et avantages de l'invention apparaîtront dans la description qui suit faite en référence aux figures annexées, dans lesquelles :
- la figure 1 est une vue partielle en coupe d'un montage d'une butée d'embrayage selon un mode de réalisation de l'invention ;
- la figure 2 est une vue en perspective de la rondelle d'autocentrage utilisée dans le montage selon la figure 1 ;
- les figures 3 à 5 sont des vues en perspective d'une rondelle d'autocentrage selon respectivement un mode de réalisation de l'invention.

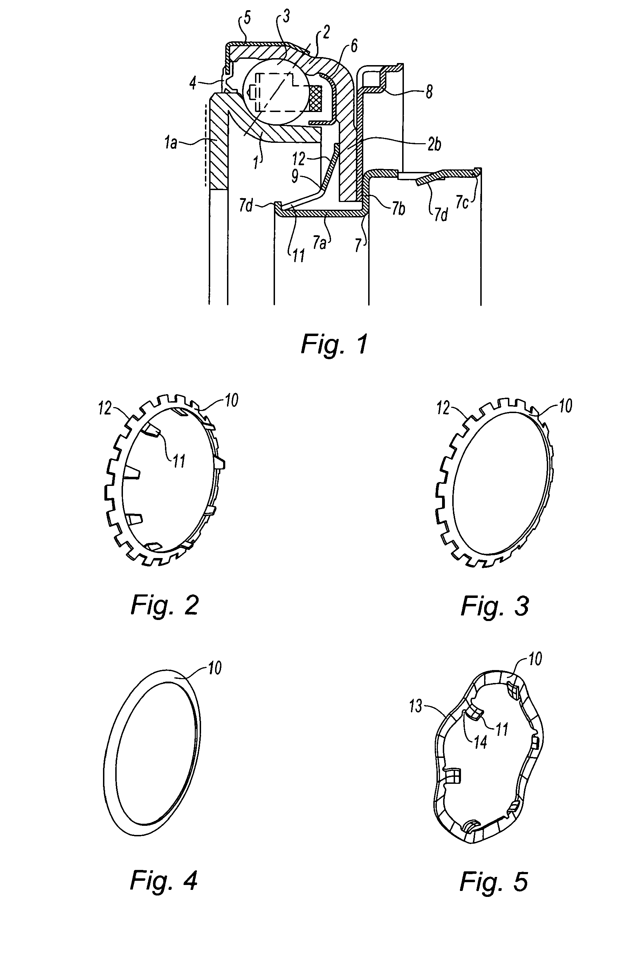

La figure 1 représente un montage d'une butée d'embrayage sur un arbre d'une boîte de vitesses de véhicule automobile, ladite butée comprenant une bague intérieure 1 et une bague extérieure 2 réalisées en tôle emboutie. La butée comprend également des corps roulants, typiquement des billes 3, qui sont disposés entre les bagues 1, 2 de sorte à permettre leur rotation relative.

Dans le mode de réalisation représenté, la bague extérieure 2 est solidarisée à l'arbre de la boîte de vitesses pour être fixe et la bague intérieure 1 est destinée à être actionnée par le diaphragme en rotation par rapport audit arbre. Pour ce faire, la bague intérieure 1 comprend une portée radiale 1 a sur laquelle le diaphragme est destiné à venir en appui.

Toutefois, le montage selon l'invention n'est pas limité à une telle réalisation, en particulier un montage prévoyant une bague intérieure solidaire de l'arbre et une bague extérieure entraînée en rotation est également envisageable.

Par ailleurs, l'espace de roulement dans lequel sont disposées les billes 3 est étanchéifié latéralement par un joint 4 en contact frottant sur la bague intérieure 1, ledit joint étant monté sur une armature 5 solidaire de la bague extérieure 2. En outre, l'espace de roulement est étanchéifié latéralement à l'opposé du joint 4 par un déflecteur 6 solidaire de la bague extérieure 2, la géométrie dudit déflecteur étant agencée pour laisser un jeu faible entre ledit déflecteur et la bague intérieure 1.

Le montage comprend un support annulaire 7 pourvu d'une portée axiale 7a de montage sur l'arbre et d'une portée radiale 7b en appui sur une portée correspondante 2b de la bague extérieure 2. L'appui est réalisé par l'intermédiaire d'une armature 8 qui est interposée entre la portée radiale 2b de la bague extérieure 2 et la portée radiale 7b du support 7.

Plus précisément, dans les modes de réalisations représentés, le support 7 comprend deux portées axiales 7a, 7c respectivement formées de part et d'autre de la portée radiale 7b et donc également de part et d'autre de la portée radiale 2b de la bague extérieure 2.

Les portées axiales, respectivement avant 7a et arrière 7c, présentent un diamètre différent, et sont conformées pour recevoir un arbre de forme correspondante (non représenté). Par ailleurs, la portée arrière 7c de plus grand diamètre comprend des griffes 7d inclinées vers l'intérieur qui sont prévues pour améliorer la rétention du support 7 sur l'arbre.

Pour compenser les défauts de concentricité entre le diaphragme et l'arbre, le montage comprend en outre une rondelle d'autocentrage 9 par l'intermédiaire de laquelle la butée est montée sur l'arbre. Pour ce faire, la rondelle d'autocentrage 9 est agencée pour pouvoir exercer un effort d'autocentrage sur la portée radiale 2b de la bague extérieure 2 et à l'opposé de la portée radiale 7b du support 7.

Pour assurer le positionnement axial de la rondelle d'autocentrage 9, la portée axiale 7a comprend un repli annulaire externe 7d qui s'étend sensiblement radialement, la rondelle 9 étant en appui sur ledit repli qui forme butée axiale.

Pour générer l'effort d'autocentrage, la rondelle d'autocentrage 9 comprend une couronne 10 en matériau métallique élastique qui est renforcée mécaniquement préalablement à sa formation. En particulier, le matériau métallique présente une limite élastique au moins égale à 850 MPa à 20°C, notamment comprise entre 1100 et 1300 MPa à 20°C.

Pour ce faire, la rondelle d'autocentrage 9 est fabriquée par mise en oeuvre d'un procédé prévoyant d'utiliser un matériau métallique ayant subi un traitement mécanique de renforcement qui est agencé pour que ledit matériau présente une limite élastique au moins égale à 850 MPa à 20°C, ladite couronne 10 étant formée dans ledit matériau renforcé mécaniquement. En particulier, le traitement mécanique de renforcement peut être choisi parmi l'écrouissage, le galetage, le grenaillage. En outre, la couronne 10 peut être formée par découpe et emboutissage.

Selon l'invention, la couronne 10 ne subit pas de traitement thermique après sa formation. Ainsi, la géométrie de la couronne 10 peut être maîtrisée de sorte à pouvoir garantir l'effort d'autocentrage généré, ledit effort étant en outre plus progressif. Par ailleurs, le traitement mécanique permet d'obtenir un renforcement plus homogène sur l'ensemble de la géométrie de la couronne 10. Par conséquent, le traitement mécanique du matériau préalablement à la formation de la couronne 10 permet d'améliorer les capabilités sur l'effort d'autocentrage par rapport à une rondelle iso-géométrique ayant subi un traitement thermique postérieurement à sa formation.

Le matériau métallique formant la rondelle 9 peut être un acier inoxydable austénitique écroui, notamment en plusieurs passes (E2 à E4). Par exemple, un acier n°1.4310 suivant la norme EN-10088 peut être utilisé pour former une rondelle d'autocentrage 9, notamment avec une épaisseur comprise entre 0,3 et 0,4 mm, en particulier avec une épaisseur de 0,4 mm. L'utilisation d'un acier inoxydable permet en outre de s'affranchir d'un traitement d'anticorrosion pour les rondelles d'autocentrage, ce qui élimine le problème de collage des rondelles huileuses entre elles lors du montage desdites rondelles.

Sur les figures 2 à 4, la couronne 10 présente une génératrice inclinée par rapport à son axe, de sorte à être disposée élastiquement en appui de part et d'autre sur la portée 2b et sur le repli annulaire 7d.

Sur la figure 2, la couronne 10 comprend une pluralité de dents internes 11 (9 dents sur la figure 2) qui s'étendent depuis son bord intérieur et une pluralité de dents externes 12 (18 dents sur la figure 2) qui s'étendent depuis son bord extérieur. Les dents externes 12 sont en appui sur la bague extérieure 2, et les dents internes 11 sont en appui sur le repli 7d (figure 1).

Par ailleurs, les dents internes 11 et externes 12 sont réparties de façon alternée sur la couronne 10, plus précisément deux dents externes 12 sont formées entre deux dents internes 11, de sorte à ne pas former les dents internes 11 et externes 12 dans un même plan radial. En outre, les dents externes 12 forment avec la couronne 10 un angle de jonction plat et les dents internes 11 forment avec la couronne 10 un angle de jonction obtus.

La géométrie de la rondelle d'autocentrage 9 selon la figure 2 présente l'avantage d'un emboutissage facilité, tout en conférant un effort d'autocentrage adapté pour la compensation des défauts de concentricité dans le montage de la butée d'embrayage.

Sur la figure 3, la géométrie de la rondelle d'autocentrage 9 est analogue à celle de la figure 2, à l'exception des dents internes qui ne sont pas formées. Ainsi, le bord interne de la couronne 10 vient directement en appui sur le repli 7d.

La figure 4, représente une rondelle Belleville comprenant une couronne 10 dont chacun des bords est respectivement en appui sur la portée 2b et sur le repli 7d.

La figure 5, représente une rondelle 9 dont la couronne 10 présente une pluralité d'ondes axiales 13 (6 sur la figure 5) et une pluralité de dents internes 11 (6 sur la figure 5) qui sont équirépartis. Par ailleurs, une découpe radiale 14 sensiblement cylindrique est prévue dans la couronne 10 respectivement de part et d'autre de la zone de jonction entre les dents internes 11 et la couronne 10. Dans le montage, la rondelle d'autocentrage 9 est disposée de sorte que les ondes 13 soient en appui sur la portée 2b, les dents internes 11 étant en appui sur le repli 7d.

## Revendications

1. Procédé de fabrication d'une rondelle d'autocentrage (9) pour une butée d'embrayage de véhicule automobile, ladite rondelle comprenant une couronne (10) en matériau métallique, ledit procédé prévoyant d'utiliser un matériau métallique ayant subi un traitement mécanique de renforcement qui est agencé pour que ledit matériau présente une limite élastique au moins égale à 850 MPa à 20°C, ladite couronne étant formée dans ledit matériau renforcé mécaniquement.

2. Procédé de fabrication selon la revendication 1, **caractérisé en ce que** le traitement mécanique de renforcement est choisi parmi l'écrouissage, le galetage, le grenaillage.

3. Procédé de fabrication selon la revendication 1 ou 2, **caractérisé en ce que** la couronne (10) est formée par découpe et emboutissage.

4. Rondelle d'autocentrage (9) pour une butée d'embrayage de véhicule automobile, ladite rondelle étant fabriquée par mise en oeuvre du procédé selon l'une quelconque des revendications 1 à 3 pour comprendre une couronne (10) en matériau métallique qui est renforcée mécaniquement préalablement à sa formation, ledit matériau présentant une limite élastique au moins égale à 850 MPa à 20°C.

5. Rondelle d'autocentrage (9) selon la revendication 4, **caractérisée en ce que** le matériau métallique est un acier inoxydable austénitique écroui.

6. Rondelle d'autocentrage (9) selon la revendication 4 ou 5, **caractérisée en ce que** la limite élastique du matériau métallique est comprise entre 1100 et 1300 MPa à 20°C.

7. Rondelle d'autocentrage (9) selon l'une quelconque des revendications 4 à 6, **caractérisée en ce que** la couronne (10) présente une génératrice inclinée par rapport à son axe.

8. Rondelle d'autocentrage (9) selon l'une quelconque des revendications 4 à 7, **caractérisée en ce que** la couronne (10) présente une pluralité d'ondes axiales (13).

9. Rondelle d'autocentrage (9) selon l'une quelconque des revendications 4 à 8, **caractérisée en ce que** la couronne (10) comprend une pluralité de dents internes (11) qui s'étendent depuis son bord intérieur et/ou une pluralité de dents externes (12) qui s'étendent depuis son bord extérieur.

10. Rondelle d'autocentrage (9) selon la revendication 9, **caractérisée en ce que** les dents externes (12) forment avec la couronne (10) un angle de jonction plat et/ou les dents internes (11) forment avec la couronne (10) un angle de jonction obtus.

11. Rondelle d'autocentrage (9) selon la revendication 9 ou 10, **caractérisée en ce que** les dents internes (11) et externes (12) sont réparties de façon alternée sur la couronne (10).

12. Montage d'une butée d'embrayage sur un arbre d'une boîte de vitesses d'un véhicule automobile, dans lequel ladite butée est montée sur l'arbre par l'intermédiaire d'une rondelle d'autocentrage (9) selon l'une quelconque des revendications 4 à 11.
